# EUROPÄISCHE PATENTSCHRIFT

(11) **EP 3 464 944 B1**
(45) Veröffentlichungstag und Bekanntmachung des Hinweises auf die Patenterteilung: **17.03.2021**
(21) Anmeldenummer: 17727491.7
(22) Anmeldetag: 29.05.2017
(51) Int. Cl.: F16H 25/20, F16H 57/04

(54) **LINEARANTRIEB MIT EINER IN EINEM LAGERSCHILD DREHBAR GELAGERTEN SPINDELMUTTER UND SPINDEL**
LINEAR DRIVE HAVING A SPINDLE NUT, WHICH IS ROTATABLY MOUNTED IN A BEARING PLATE, AND A SPINDLE
ENTRAÎNEMENT LINÉAIRE COMPORTANT UN ÉCROU DE BROCHE ET UNE BROCHE MONTÉS À ROTATION DANS UN FLASQUE

(30) Priorität: 06.06.2016 DE 102016006734
(43) Veröffentlichungstag der Anmeldung: 10.04.2019
(73) Patentinhaber: SEW-EURODRIVE GmbH & Co. KG, 76646 Bruchsal (DE)
(72) Erfinder: DITTES, Gerhard, 75053 Gondelsheim (DE)
(86) Internationale Anmeldenummer: PCT/EP2017/025151
(87) Internationale Veröffentlichungsnummer: WO 2017/211463

(56) Entgegenhaltungen:
- DE-A1- 4 105 090
- FR-A1- 2 856 452
- JP-A- 2010 007 769
- JP-A- 2011 224 729

## Beschreibung

Die Erfindung betrifft einen Linearantrieb mit einer in einem Lagerschild drehbar gelagerten Spindelmutter und Spindel.

Es ist allgemein bekannt, dass bei relativer Drehbewegung einer Spindel zu einer Spindelmutter eine relative Linearverschiebung zwischen Spindel und Spindelmutter stattfindet, wenn die Spindel oder die Spindelmutter an der Drehbewegung gehindert wird und die Spindel in die Spindelmutter eingeschraubt ist.

**Aus der** DE 10 2008 018 336 A1 **ist als nächstliegender Stand der Technik ein Federbein für Radaufhängungen von Kraftfahrzeugen bekannt.**

**Aus der** DE 10 2008 053 617 A1 **ist eine Radaufhängung für Kraftfahrzeuge bekannt.**

**Aus der** FR 2 856 452 A1 **ist als nächstliegender Stand der Technik ein Linerantrieb bekannt.**

**Aus der** DE 41 05 090 A1 **ist eine Führungseinrichtung für zusammengesetzte Bewegungen bekannt.**

**Aus der** JP 2011 224729 A **ist ein Lineartrieb bekannt.**

**Aus der** JP 2010 007769 A **ist ein elektrischer Linearantrieb mit Faltenbalg bekannt.**

Der Erfindung liegt daher die Aufgabe zugrunde, eine höhere Schutzart bei einem Linearantrieb zu erreichen.

Erfindungsgemäß wird die Aufgabe bei dem Linearantrieb nach den in Anspruch 1 angegebenen Merkmalen gelöst.

Wichtige Merkmale der Erfindung bei dem Linearantrieb mit einer in einem Lagerschild drehbar gelagerten Spindelmutter und Spindel, wobei die Spindel in die Spindelmutter eingeschraubt ist, die Spindel durch die Spindelmutter hindurchgeführt ist, und die Spindel beidseitig aus dem Lagerschild hervorragt,
wobei ein erster Faltenbalg einen ersten Bereich der Spindel zumindest teilweise umgibt und ein zweiter Faltenbalg einen zweiten Bereich der Spindel zumindest teilweise umgibt, insbesondere wobei der erste Bereich und der zweite Bereich voneinander beabstandet sind, insbesondere wobei zumindest das Lagerschild zwischengeordnet ist,
wobei das Lagerschild eine durchgehende Ausnehmung aufweist zum Luftdruckausgleich zwischen dem von dem ersten Faltenbalg umgebenen Luftraum und dem von dem zweiten Faltenbalg umgebenen Luftraum.

Von Vorteil ist dabei, dass eine höher Schutzart in einfacher Weise erreichbar ist, weil nur ein Luftkanal zwischen den beiden von Faltenbalgen umgebenen Lufträumen zu schaffen ist. Hierzu ist erfindungsgemäß ein durchgehender Luftkanal im Lagerschild angeordnet, so dass die bei Drehbewegung entstehende Wärme von der den Druckausgleich schaffenden Luftströmung zumindest teilweise mitabtransportierbar ist. Somit ist der Linearantrieb hermetisch abgeschlossen ausführbar. Durch den Luftstrom wird die im Bereich des Riementriebs und der Spindelmutter entstehende Wärme aufgespreizt auf den von den Faltenbalgen umgebenen Luftraum. Somit ist eine verbesserte Entwärmung erreichbar.

Bei einer vorteilhaften Ausgestaltung ist das Lagerschild zwischen dem ersten und dem zweiten Faltenbalg angeordnet, insbesondere also der erste Faltenbalg vom zweiten Faltenbalg beabstandet ist, insbesondere mittels zumindest des Lagerschilds. Von Vorteil ist dabei, dass mittels des durchgehenden Luftkanals eine hohe Schutzart infolge der hermetisch dichten Ausführung erreichbar ist.

Bei einer vorteilhaften Ausgestaltung ist der erste Faltenbalg mit einem Abdeckteil verbunden ist, welches lösbar verbunden ist mit einem Deckelteil eines Riementriebs,
wobei das Deckelteil mit einem Gehäuseteil des Riementriebs verbunden ist, welches mit dem Lagerschild verbunden ist, insbesondere an dessen vom zweiten Faltenbalg abgewandten Seite des Lagerschilds,
wobei das Lagerschild, insbesondere an dessen vom ersten Faltenbalg abgewandter Seite, mit einem Deckelteil verbunden oder einstückig ausgeführt ist,
wobei der zweite Faltenbalg mit dem Deckelteil verbunden ist. Von Vorteil ist dabei, dass eine einfache Herstellung ermöglicht ist.

Bei einer vorteilhaften Ausgestaltung ist die Spindelmutter drehfest mit einem Verzahnungsteil des Riementriebs verbunden,
insbesondere wobei die Verzahnung des Verzahnungsteils im Eingriff ist mit einem Riemen, insbesondere Zahnriemen, des Riementriebs,
wobei der Riemen mit der Verzahnung eines weiteren Verzahnungsteils im Eingriff ist,
wobei das weitere Verzahnungsteil drehfest mit der Rotorwelle eines Elektromotors verbunden ist. Von Vorteil ist dabei, dass die Spindelmutter mittels eines koaxial angeordneten Motors antreibbar ist, der beabstandet ist. Somit ist eine in axialer Richtung, also in Achsrichtung der Spindel, gesehene kompakte Ausführung ermöglicht. Der in Querrichtung benötigte Bauraum ist dabei allerdings erhöht. Trotzdem ist eine hermetisch dichte Ausführung ermöglicht.

Bei einer vorteilhaften Ausgestaltung weist das Abdeckteil eine durchgehende Ausnehmung auf, welche einen Luftdurchlass zwischen dem von dem ersten Faltenbalg umgebenen Luftraum und dem vom Riementrieb, insbesondere vom Gehäuseteil des Riementriebs umgebenen und vom Deckelteil sowie vom Abdeckteil Luftraum, umgebenen Luftraum bewirkt. Von Vorteil ist dabei, dass eine verbesserte Entwärmung erreichbar ist.

Bei einer vorteilhaften Ausgestaltung weist das insbesondere mit dem zweiten Faltenbalg verbundene Deckelteil eine durchgehende Ausnehmung auf, welche einen Luftdurchlass zwischen dem von dem zweiten Faltenbalg umgebenen Luftraum und der durch das Lagerschild durchgehenden Ausnehmung bewirkt. Von Vorteil ist dabei, dass ein Luftdruckausgleich in einfacher Weise erreichbar ist und eine verbesserte Entwärmung.

Bei einer vorteilhaften Ausgestaltung nimmt das Lagerschild ein Lager auf und die durch das Lagerschild durchgehende Ausnehmung ist vom Lager beabstandet,
insbesondere einen größeren Radialabstand aufweist als das Lager, insbesondere zur Achse der Spindel. Von Vorteil ist dabei, dass die Wärme des Lagers abtransportierbar ist mittels des durchgehenden Luftstroms, welcher vom bei Linearbewegung der Spindel entstehenden Druckunterschied zwischen den von den Faltenbalgen umgebenen Lufträumen angetrieben wird.

Bei einer vorteilhaften Ausgestaltung mündet die durch das Lagerschild durchgehende Ausnehmung einerseits in die durch das Deckteil durchgehende Ausnehmung und andererseits in den vom Riementrieb umgebenen Luftraum. Von Vorteil ist dabei, dass auch die im Riementrieb erzeugte Wärme vom durch den bei Linearbewegung entstehenden Luftdruckunterschied angetriebenen Luftstrom Wärme abtransportierbar ist.

Bei einer vorteilhaften Ausgestaltung ist im Lagerschild oder am Deckelteil ein Wellendichtring aufgenommen, welcher zur Spindelmutter hin abdichtet,
insbesondere wobei der vom zweiten Faltenbalg umgebene Luftraum gegenüber dem vom Lager überdeckten Raumbereich abgedichtet ist mittels des Wellendichtrings. Von Vorteil ist dabei, dass der das Deckelteil und das Lagerschild durchdringende Luftkanal auch die vom Wellendichtring bei Drehbewegung der Spindel erzeugte Wärme abtransportierbar macht mittels des vom Druckunterschied angetriebenen Luftstroms.

Bei einer vorteilhaften Ausgestaltung sind am Lagerschild in Querrichtung zur Achsrichtung der Spindel hervorragende Erhebungen ausgeformt, an welchen die anzutreibende Vorrichtung mittels eines Kardangelenks oder Kreuzgelenks verbindbar ist, insbesondere wobei die Drehachsen dieses Gelenks jeweils senkrecht zur Achsrichtung der Spindel ausgerichtet sind, insbesondere wobei die Drehachsen einen verschwindenden Abstand zueinander aufweisen. Von Vorteil ist dabei, dass Verspannungen vermeidbar sind und somit die Standzeit insgesamt verlängert ist.

Bei einer vorteilhaften Ausgestaltung sind am Lagerschild in Querrichtung zur Achsrichtung der Spindel hervorragende Erhebungen ausgeformt, an welchen ein Kardangelenk oder Kreuzgelenk angeordnet ist zur Verbindung mit einer anzutreibenden Vorrichtung,
insbesondere wobei die Drehachsen dieses Gelenks jeweils senkrecht zur Achsrichtung der Spindel ausgerichtet sind, insbesondere wobei die Drehachsen einen verschwindenden Abstand zueinander aufweisen. Von Vorteil ist dabei, dass Verspannungen vermeidbar sind und somit die Standzeit insgesamt verlängert ist.

Bei einer vorteilhaften Ausgestaltung ist an einem Endbereich der Spindel ein Kardangelenk oder Kreuzgelenk zur Verbindung mit einem Teil der anzutreibenden Vorrichtung angeordnet, insbesondere wobei die Drehachsen dieses Gelenks jeweils senkrecht zur Achsrichtung der Spindel ausgerichtet sind, insbesondere wobei die Drehachsen voneinander beabstandet sind. Von Vorteil ist dabei, dass Verspannungen vermeidbar sind und somit die Standzeit insgesamt verlängert ist.

Weitere Vorteile ergeben sich aus den Unteransprüchen. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Schnittansicht eines Linearantrieb gezeigt, wobei ein Elektromotor 7 über einen Riementrieb einen Spindeltrieb antreibt, wobei der Elektromotor 7 über den Riementrieb beabstandet vom Spindeltrieb angeordnet ist und die Spindel 17 des Spindeltriebs axial beidseitig aus einem Lagerschild 1 des Spindeltriebs hervorragt und axial vorwärts oder rückwärts bewegbar ist.

In der Figur 2 ist ein am Lagerschild 1 angeordnetes Kardangelenk des Spindeltriebs angeschnitten dargestellt.

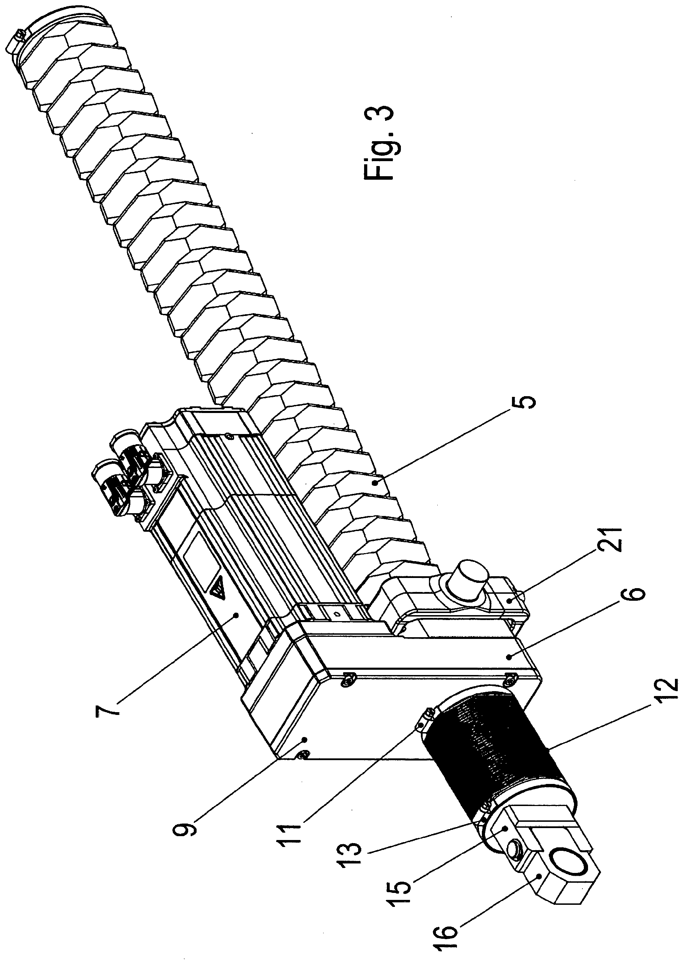

In der Figur 3 ist der Linearantrieb in Schrägansicht dargestellt.

In der Figur 4 ist ein Ausschnitt des Linearantriebs in Schrägansicht angeschnitten dargestellt.

In der Figur 5 ist das Lagerschild 1 angeschnitten in Schrägansicht dargestellt, so dass ein im Lagerschild angeordneter Luftkanal ersichtlich ist.

In der Figur 6 ist ein Ausschnitt des Linearantriebs in Schrägansicht aus einer anderen Blickrichtung als in Figur 4 dargestellt.

In der Figur 7 ist ein Ausschnitt des Linearantriebs im Querschnitt gezeigt, so dass die axiale Luftdurchführung erkennbar ist.

In der Figur 8 ist ein Teil des Kardangelenks in explodierter Ansicht dargestellt.

In der Figur 9 ist ein anderer **nicht** erfindungsgemäßer Linearantrieb in Schrägansicht dargestellt, bei welchem der Elektromotor 7 die Spindel des Spindeltriebs direkt antreibt, also koaxial zum Spindeltrieb angeordnet ist.

In der Figur 10 ist der zu Figur 9 gehörige Spindeltrieb angeschnitten dargestellt.

In der Figur 11 ist ein weiterer **nicht** erfindungsgemäßer Linearantrieb gezeigt, wobei der Spindeltrieb der Figur 9 über einen Riementrieb von einem über den Riementrieb beabstandeten Elektromotor 7 angetrieben wird.

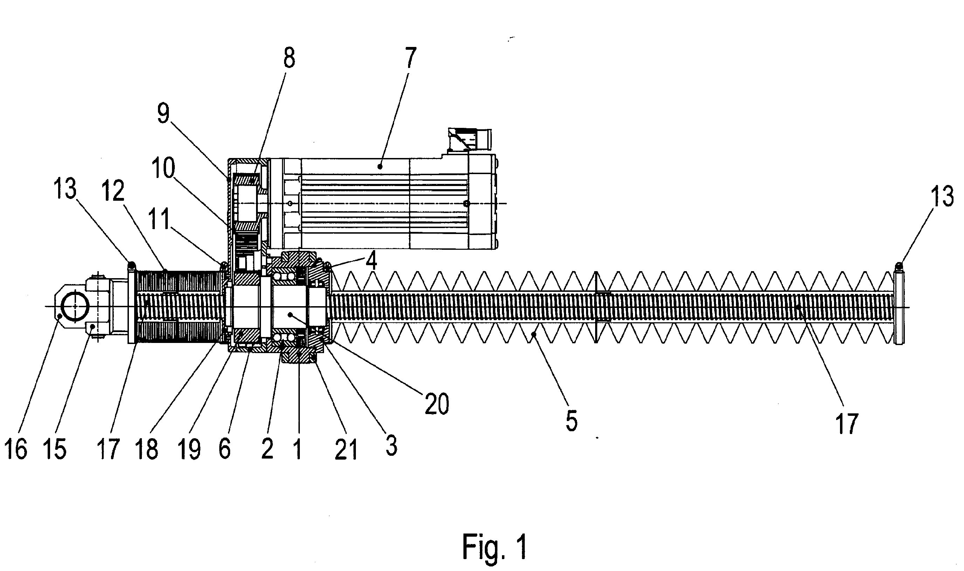

Wie in Figur 1 gezeigt, treibt ein Elektromotor 7 über einen Riementrieb einen Spindeltrieb an. Dabei ist ein Verzahnungsteil 8 drehfest verbunden mit der Rotorwelle des Elektromotors 7. Mittels des Verzahnungsteils 8 wird ein Riemen 10 angetrieben, dessen Verzahnung mit der Verzahnung des Verzahnungsteils 8 im Eingriff steht.

Das Gehäuse des Elektromotors 7 ist mit einem Gehäuseteil 6 des Riementriebs schraubverbunden.

Beabstandet von dem Gehäuseteil 6 des Riementriebs ist ein Lagerschild 1 verbunden mit dem Gehäuseteil 6 des Riementriebs.

Im Lagerschild 1 ist ein zweireihiges Wälzlager 2 aufgenommen, das zur drehbaren Lagerung einer Spindelmutter 20 vorgesehen ist. Mit der Spindelmutter 20 ist ein Verzahnungsteil 19 drehfest verbunden, dessen Verzahnung ebenfalls mit dem Riemen **10** im Eingriff steht. Somit ist die Spindelmutter 20 vom Riemen 10 antreibbar.

Ins Innengewinde der Spindelmutter 20 ist eine Spindel 17 eingeschraubt. Die Spindel 17 ragt aus der Spindelmutter 20 axial beidseitig heraus.

Bei Drehung der Spindelmutter 20 verschiebt sich somit die Spindel 17, solange diese an der Drehbewegung gehindert wird. Hierzu ist die Spindel 17 über ein Kardangelenk mit einer weiteren in der Figur 1 nicht gezeigten, von dem Linearantrieb anzutreibenden Vorrichtung antreibbar. Dabei ist am Ende ein Bolzen in Bohrlöcher eine Gelenkaufnahmeteils 15 eingeführt, so dass der Bolzen drehbar gelagert ist in den zueinander koaxial ausgerichteten Bohrlöchern des Gelenkaufnahmeteils 15.

Zwischen den Bohrlöchern ist der Bolzen auch durchgehend durch ein durch ein Gelenkteil 16 durchgehendes Bohrloch ausgerichtet. Beabstandet von dem Bolzen weist das Gelenkteil 16 auch eine weitere durchgehende Bohrung auf, so dass hier ein Bolzen der anzutreibenden Vorrichtung hindurchführbar, der aber vorzugsweise senkrecht ausgerichtet ist zum vorgenannten Bolzen. Auf diese Weise ist also die Spindel 17 mittels eines Kardangelenks mit der anzutreibenden Vorrichtung verbindbar.

Abtriebsseitig ist mit dem Gehäuseteil 6 des Riementriebs ein Deckelteil 9 schraubverbunden, so dass das Innere des Riementriebs geschützt angeordnet ist.

Mit dem Gehäuseteil 6 ist ein Deckelteil 9 schraubverbunden. Das Gehäuseteil 6 ist zusammen mit dem Deckelteil 9 infolge vorgesehener Langlöcher relativ verschiebbar zum Lagerschild, wenn entsprechende Verbindungsschrauben gelöst werden. Auf diese Weise ist der Achsabstand zwischen der Rotorwellenachse und der Spindelachse der Spindel 17 einstellbar, also die Riemenspannung einstellbar

Das zweireihige Lager 2 ermöglicht einen sehr kompakten Aufbau.

Auf der von der Abtriebsseite axial abgewandten Seite ist am Lagerschild 1 ein Deckelteil 3 angeordnet, welches schraubverbunden ist mit dem Lagerschild 1.

Ein Faltenbalg 5, welcher die Spindel 17 umgibt ist mittels eines Klemmteils 4, insbesondere Klemmschelle, klemmverbunden mit dem Deckelteil 3. Auf dem vom Deckelteil 3 axial abgewandten Endbereich der Spindel 17 ist das andere Ende des Faltenbalgs 5 ebenfalls mit einem Klemmteil 13, insbesondere Klemmschelle, mit der Spindel 17 verbunden . Somit umgibt der Faltenbalg 5 ein Luftvolumen, in welchem ein Bereich der Spindel 17 angeordnet ist.

Der Elektromotor 7 treibt mittels seiner Rotorwelle den Riementrieb an, so dass die Spindelmutter 20 gedreht wird. Die Spindel 17 ist zumindest an einem ihrer Endbereiche mit einer anzutreibenden Vorrichtung verbunden, so dass sie an der Drehbewegung gehindert ist. Somit muss die Spindel 17 sich in Abhängigkeit von der Drehbewegung der Spindelmutter 20 linear, also axial vorwärts oder rückwärts bewegen.

Das vom Faltenbalg5 eingeschlossene Luftvolumen ist also abhängig von der Position der Spindel 17.

Des Weiteren sind Langlöcher am Gehäuseteil 6 des Riementriebs ausgeführt, so dass die Riemenspannung einstellbar ist.

Das Abdeckteil 18 ist auf der axial vom Lagerschild 1 und vom Deckelteil 3 abgewandten Seite des Riementriebs abgewandten Seite angeordnet und mit einem weiteren Faltenbalg 12 mittels eines weiteren Klemmteils 11, insbesondere Klemmschelle, klemmverbunden. Das Abdeckteil 18 mit Wellendichtring zur Abdichtung der drehenden Spindelmutter 20, ist zum Deckelteil 9 über Langlöcher verschieblich. Damit kann der Achsversatz durch das Riemenspannen kompensiert werden.

Ebenfalls mittels eines weiteren Klemmteils 13, insbesondere Klemmschelle, ist die Spindel 17 an ihrem vom Abdeckteil 18 abgewandten Endbereich klemmverbunden. Somit ist vom weiteren Faltenbalg 12 ein weiteres Luftvolumen eingeschlossen, in welchem sich ein Bereich der Spindel 17 befindet

Wenn nun die Linearposition der Spindel 17 sich ändert, ändert sich auch das von dem Faltenbalg 5 umschlossene Luftvolumen und zwar um etwa denselben Betrag, um den sich das vom Faltenbalg 12 umschlossene Luftvolumen ändert.

Die beiden Lufträume, also der zwischen Spindel 17 und Faltenbalg 5 angeordnete Luftraum und der zwischen Spindel 17 und Faltenbalg 12 angeordnete Luftraum, sind über einen Luftkanal verbunden, der mittels entsprechender Ausnehmungen im Abdeckteil 18, im Lagerschild 1 und im Deckelteil 3 angeordnet ist.

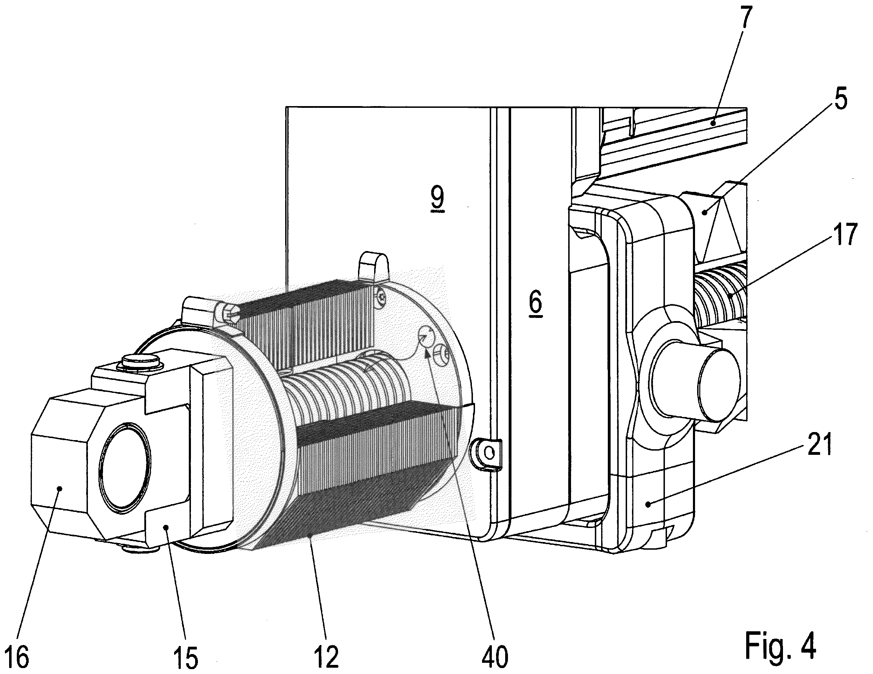

Wie in Figur 4 gezeigt, weist das Abdeckteil 18 also eine axial durchgehende Ausnehmung 40 auf, die den vom Faltenbalg 12 umgebenen Luftraum mit dem vom Riementrieb umgebenen Luftraum verbindet.

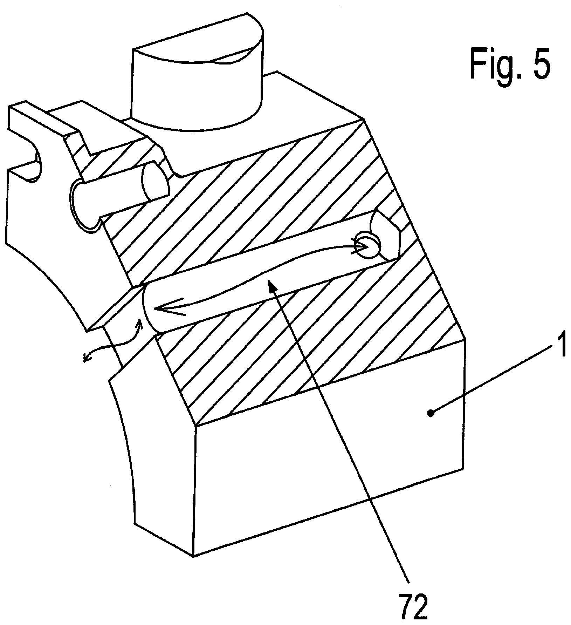

Wie in Figur 5 gezeigt weist das Lagerschild 1 eine Ausnehmung 72 auf, die als Luftkanal wirkt. Dabei wird die Luft radial um das vom Lagerschild 1 aufgenommene zweireihige Lager 2 herumgeführt. Somit wird die vom Lager 2 und von der Spindelmutter 20 erzeugte Wärme von der durch die Ausnehmung 72 strömende Luft aufgenommen. Da das Lager 2 zweireihig ausgeführt ist, wird eine hohe Wärmemenge in kleinem Volumen erzeugbar. Somit nimmt das Lagerschild 1 den so erzeugten Wärmestrom zunächst auf und wird dann zumindest teilweise über den durch die Ausnehmung 72 gebildeten Luftkanal entwärmt.

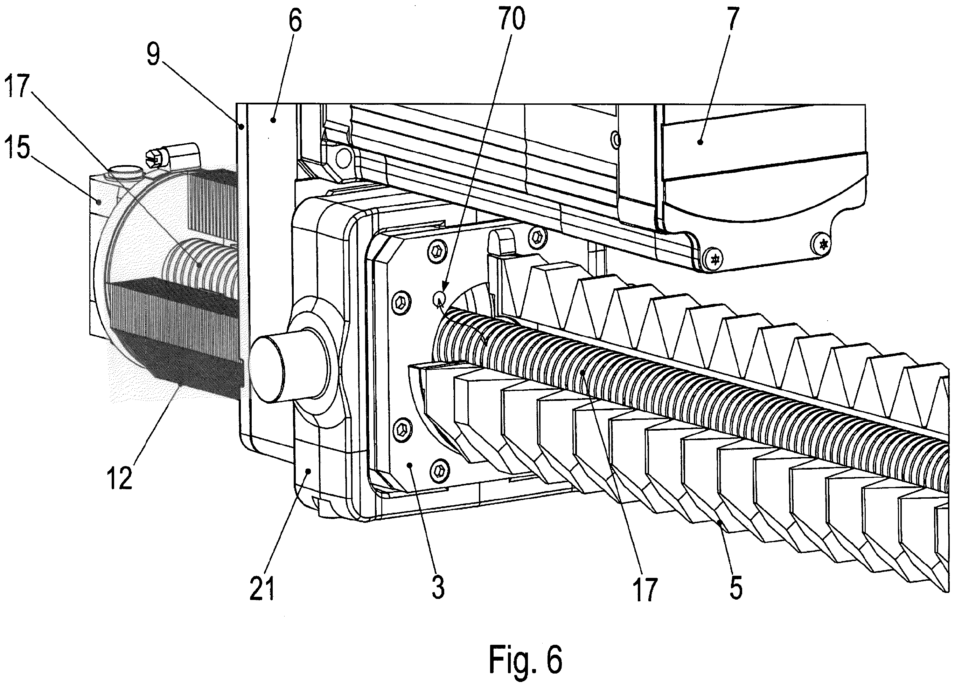

Wie in Figur 6 gezeigt, mündet die Ausnehmung 72 an ihrem dem Deckelteil 3 zugewandten Endbereich in der Öffnung 70 im Deckelteil 3, so dass Luft durchleitbar ist zu dem vom Faltenbalg 5 umschlossenen Luftraum.

Auf diese Weise ist ein Luftausgleich zwischen den von den Faltenbalgen (5, 12) umgebenen Lufträumen herstellbar und es entsteht auch bei Änderungen der Linearposition der Spindel 17 keine unzulässig hohen Überdrucke. Der Luftdruck in den beiden von den Faltenbalgen (5, 12) umgebenen Lufträumen ist also im Wesentlichen konstant. Dadurch können dünnwandige, kompaktbauende Faltenbälge verwendet werden, da Verformungen durch Druckunterschiede nicht auftreten.

Da die Summe der Volumina der beiden Lufträume unabhängig ist von der Linearposition der Spindel 17, wirkt für das Gesamtvolumen die Linearbewegung nur als isochorer Prozess.

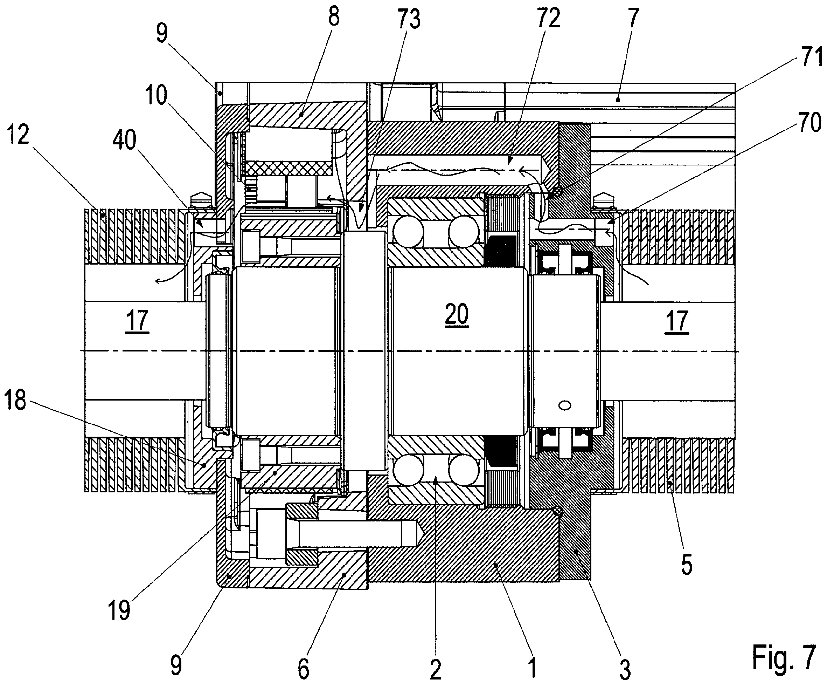

Wie in Figur 7 näher dargestellt, weist der in dem Lagerschild eingebrachte Luftkanal eine Radialbohrung 71 auf, welche vom Radialabstand der Öffnung 70 auf einen Radialabstand führt, welcher größer ist als der größte vom Lager 2 überdeckte Radialabstand. Die Radialbohrung 71 mündet in die Ausnehmung 72, welche als axiale Bohrung ausgeführt ist, welche nicht durchgehend ausgeführt sein muss, also als Sacklochbohrung ausgeführt sein darf.

Die Ausnehmung 72 ist also radial von dem Außenring des Lagers 2 beabstandet.

Die Ausnehmung 72 mündet über einen wiederum radial verlaufenden Spalt, also eine radial verlaufende Ausnehmung im vom Riementrieb umgebenen Luftraum, der über die Ausnehmung 40 mit dem vom Faltenbalg 12 umgebenen Luftraum verbunden ist.

Das Lager 2 ist an seinem dem Faltenbalg 12 zugewandten Endbereich gegen einen im Lagerschild 1 ausgebildeten Absatz angestellt und von einem auf der axial davon abgewandten Seite angeordneten, mit dem Lagerschild 1 schraubverbundenen Klemmring angedrückt.

Die Ausnehmung 70 ist radial von einem im Deckelteil 3 aufgenommenen Wellendichtring beabstandet und entwärmt somit das Deckelteil 3, wenn ein Luftstrom durch die Ausnehmung 70 strömt.

Da vom Lager 2, von der Spindelmutter 20 und von dem Wellendichtring nur Wärme erzeugt wird, wenn der Motor eine Drehbewegung der Spindelmutter 20 erzwingt, wird die Wärme abtransportiert von dem durch die dadurch erzwungene Änderung der Linearposition bewirkten Luftstrom zum Druckausgleich zwischen den von den Faltenbalgen (5, 12) umgebenen Lufträumen.

Am Lagerschild 1 ist beidseitig in Querrichtung zur Achsrichtung der Spindel 17 jeweils eine Erhebung ausgebildet, die als vorzugsweise zylindrischer Zapfenabschnitt hervorsteht und ausgeformt ist.

Zur Befestigung am stationären Teil der anzutreibenden Vorrichtung ist ein Kardangelenk vorgesehen.

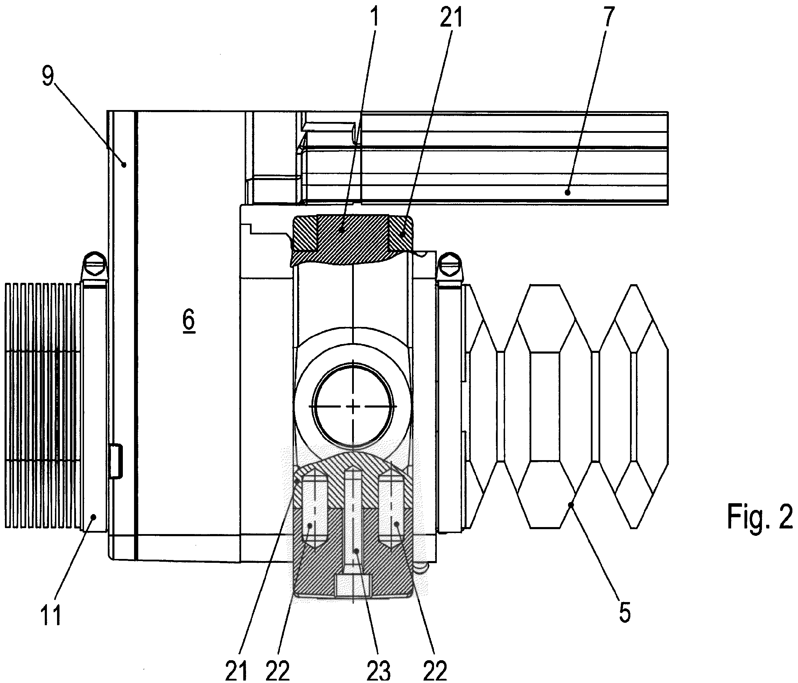

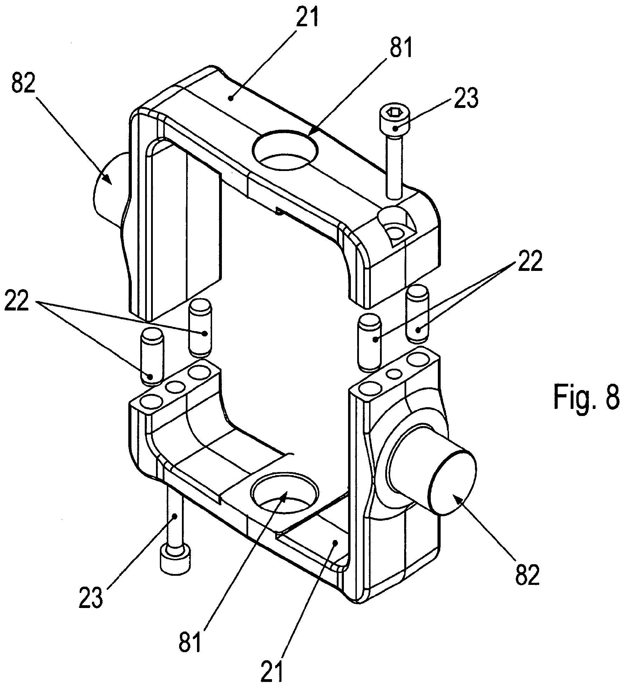

Wie in Figur 2 zusammen mit Figur 8 gezeigt, ist auf die jeweilige Erhebung ein jeweiliges Gelenkteil 21 aufgesteckt, wobei die beiden Gelenkteile mittels eines oder mehreren Schraubteilen 23 miteinander verbunden sind und dabei die beiden Gelenkteile durch Bolzen 22 zentriert sind, welche in jeweilige Sacklöcher der beiden Gelenkteile 21 eingesteckt sind. Die Kraftübertragung erfolgt ganz oder im Wesentlichen über den mittels der Bolzen 22 bewirkten Formschluss.

Jedes der Gelenkteile 21 weist jeweils eine runde, insbesondere zylindrische Ausnehmung 81 auf, durch welche die jeweilige Erhebung des jeweiligen Gelenkteils 21 gesteckt ist.

Die beiden Gelenkteile 21 sind gleichartig ausgeführt und - wie in der in Figur 8 dargestellten explodierten Darstellung gezeigt - mittels in Sacklochbohrungen teilweise eingesteckten Bolzen 22 zentriert. Mittels der Schraubteile 23 sind die beiden Gelenkteile 21 aneinander gedrückt, insbesondere ist das jeweilige Schraubteil durch ein Bohrloch eines jeweiligen Gelenkteils 21 durchgesteckt und mit seinem Gewindebereich eingeschraubt in eine Gewindebohrung des jeweils anderen Gelenkteils 21, so dass der jeweilige Schraubenkopf des jeweiligen Schraubteils das erste Gelenkteil 21 gegen das andere drückt.

An jedem Gelenkteil 21 ist ein jeweiliger Zapfenabschnitt 82 ausgeformt, der in Querrichtung zur Achsrichtung der Spindel 17 und in Querrichtung zu den Erhebungen des Lagerschildes nach außen hervorragt.

Zur Reduzierung der Reibung sind die Erhebungen und/oder Zapfenabschnitte 82 oberflächenbehandelt, insbesondere karbonitriert. Die Erhebungen sind mittels Spielpassung in die Ausnehmungen 81 eingesteckt. Ebenso sind die Zapfenabschnitte 82 mit Spielpassung in entsprechenden Ausnehmungen der anzutreibenden Vorrichtung eingesteckt. Auf diese Weise ist ein nicht verschwindender Bewegungsfreiheitsgrad vorhanden.

Der Vorteil der zweiteiligen Ausführung des Kardangelenkstücks gemäß Figur 8 ist, dass eine einfache Montage ausführbar ist. Denn die beiden Gelenkteile 21 werden jeweils von radial außen kommend mit ihren Ausnehmungen 81 auf die am Lagerschild 1 ausgebildeten Zapfenabschnitte aufgeschoben und dann miteinander schraubverbunden. Auf diese Weise ist eine einfache Montage ermöglicht.

Der vom Kardangelenk in axialer Richtung, also in der Linearantriebsrichtung des Linearantriebs, überdeckte Bereich überlappt mit dem vom Lager 2 axial überdeckten Bereich und auch mit dem vom Lagerschild 1 axial überdeckten Bereich.

Somit ist eine erhöhte Stabilität erreichbar. Denn der durch die Spielpassungen bewirkte Freiheitsgrad findet somit im Beriech des Lagers 2 seinen Ursprung.

Am vom Lagerschild 1 abgewandten Endbereich der Spindel 17 ist diese zum Faltenbalg 5 hin luftdicht abgeschlossen und somit auch vor Verschmutzung durch Schmutzpartikel der Umgebung geschützt.

Am anderen Endbereich der Spindel 17 ist diese ebenfalls luftdicht abgeschlossen zum weiteren Faltenbalg 12 hin. Außerdem ist an diesem Endbereich ein Gelenkaufnahmeteil 15 mit der Spindel verbunden, das einen Bolzen lagert, der in einer Bohrung eines Gelenkteils 16 aufgenommen ist. Das Gelenkteil 16 weist eine Bohrung auf, die quer zum im Gelenkteil aufgenommenen Bolzen ausgerichtet ist.

Somit ist auch hier eine Verbindung mit der anzutreibenden Vorrichtung über ein Kardangelenk ermöglicht, welche Winkelfehler ausgleicht und somit Verspannungen reduzierbar oder vermeidbar macht. Vorzugsweise ist das Kardangelenk zweiwertig ausgeführt.

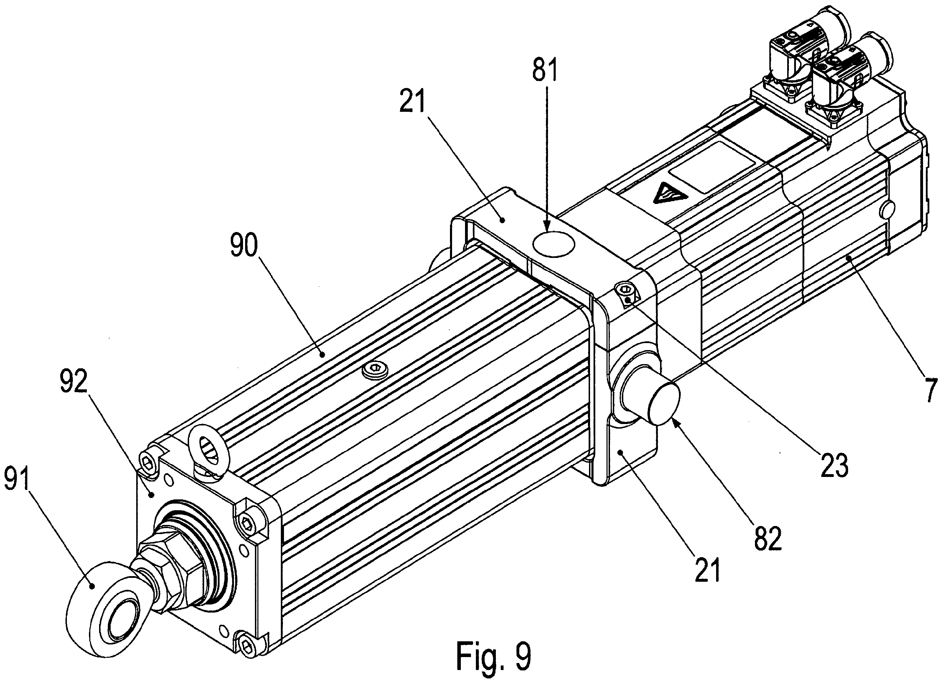

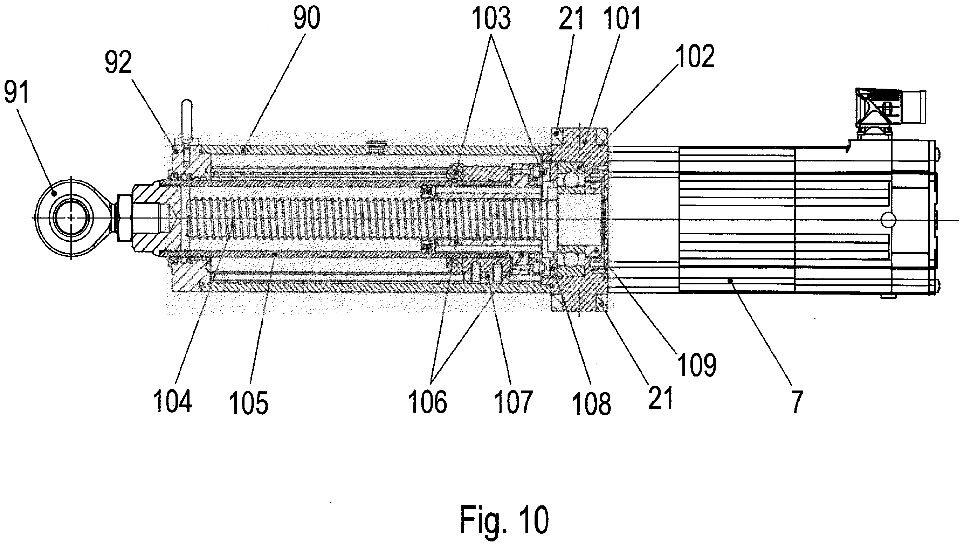

Wie in Figur 9 und 10 gezeigt, ist die Verbindung mit der anzutreibenden Vorrichtung über ein Kardangelenk auch bei einem anderen Linearantrieb ermöglicht, bei welchem der Elektromotor 7, insbesondere dessen Rotorwelle kollinear mit der Spindel 104 angeordnet ist.

Dabei ist nicht die mit der Rotorwelle des Elektromotors 7 drehfest verbundene Spindel 104 linear bewegbar sondern die Spindelmutter 106. Da die Spindel 104 drehfest mit der linear nicht verschiebbar angeordneten Rotorwelle des Elektromotors 7 verbunden ist, wird bei Drehen der Rotorwelle die Spindelmutter 106 linear verschoben, da ein Nutenstein107 mit der Spindelmutter 106 schraubverbunden ist und in eine axial sich erstreckende Nut des Gehäuseteils 90 eintaucht. Somit ist der Nutenstein 107 nur in axialer Richtung entlang der Nut, also Längsnut, bewegbar. Mit der Spindelmutter 106 ist eine Kolbenstange 105 verbunden, welche mit der Spindelmutter 106 linear verfährt und am vom Motor 7 abgewandten Endbereich des Gehäuseteils 90 aus einem mit dem Gehäuseteil 90 verbundenen Deckelteil 92 herausragt. Zwischen dem Gehäuseteil 90 und der Kolbenstange 105 ist eine Dichtung angeordnet.

Am vom Elektromotor 7 abgewandten Endbereich der Kolbenstange 105 ist ein Gelenkteil 91 angeordnet, so dass auch hier eine Befestigung mittels eines Kugelgelenks ausführbar ist. Bei dieser Ausführung ist ein Kugelgelenk mit zusätzlichem Freiheitsgrad möglich, da die Kolbenstange ja verdrehgesichert ausführt; ansonsten müsste das Reaktionsmoment der Spindel über das Kreuzgelenkteil in die anzutreibende Vorrichtung abgeleitet werden.

Die Kolbenstange 105 ist in ein Verschlussteil eingeschraubt, welches das vom Lagerschild 101 abgewandte Ende der hohlen, insbesondere hohlzylindrisch ausgeführten, Kolbenstange 105 abschließt.

Am dem Elektromotor 7 zugewandten Endbereich des Gehäuseteils 90 ist ein Lagerschild 101 angeordnet, welches ein Lager 102 aufnimmt, mittels dessen die Rotorwelle gelagert ist. Das Lager 102 ist von einem ins Lagerschild 101 eingeschraubten Klemmring 108 gegen eine Stufe des Lagerschildes 101 gedrückt.

An der Spindelmutter 106 sind axial beidseitig Dämpfungsringe 103 angeordnet. Somit ist ein hartes Aufschlagen an den axialen Endpositionen verhindert. Der dem Lagerschild 101 zugewandt angeordnete Dämpfungsring 103 schlägt an der ersten axialen Endposition auf einen Klemmring 108 auf, der ins Lagerschild 101 eingeschraubt ist und das Lager 102 gegen einen am Lagerschild 101 ausgebildeten Absatz andrückt. Die über das Lager 102 gelagerte, mit der Spindel 104 drehfest verbundene Rotorwelle ist mittels eines ebenfalls im Lagerschild 101 aufgenommenen Wellendichtrings 109 abgedichtet. Somit ist der zumindest teilweise mit Schmierstoff befüllte Innenraum des Spindeltriebs, insbesondere das mit dem Schmierstoff geschmierte Lager 102, abgedichtet von dem Innenraum des Elektromotors.

Das Lagerschild 101 weist wiederum hervorragende Erhebungen auf, so dass ein Kardangelenk gemäß Figur 8 vorsehbar ist. Auf diese Weise ist wiederum die anzutreibende Vorrichtung mittels Kardangelenk verbindbar, wobei der vom Kardangelenk überdeckte axiale Bereich wiederum überlappt mit dem vom Lager 102 überdeckten Bereich und/oder mit dem vom Lagerschild 101 überdeckten axialen Bereich. Somit ist das Kardangelenk wiederum in demjenigen Bereich angeordnet, in welchem große Kräfte einleitbar sind, insbesondere also ins Lagerschild 101. Somit ist eine hohe Stabilität erreichbar.

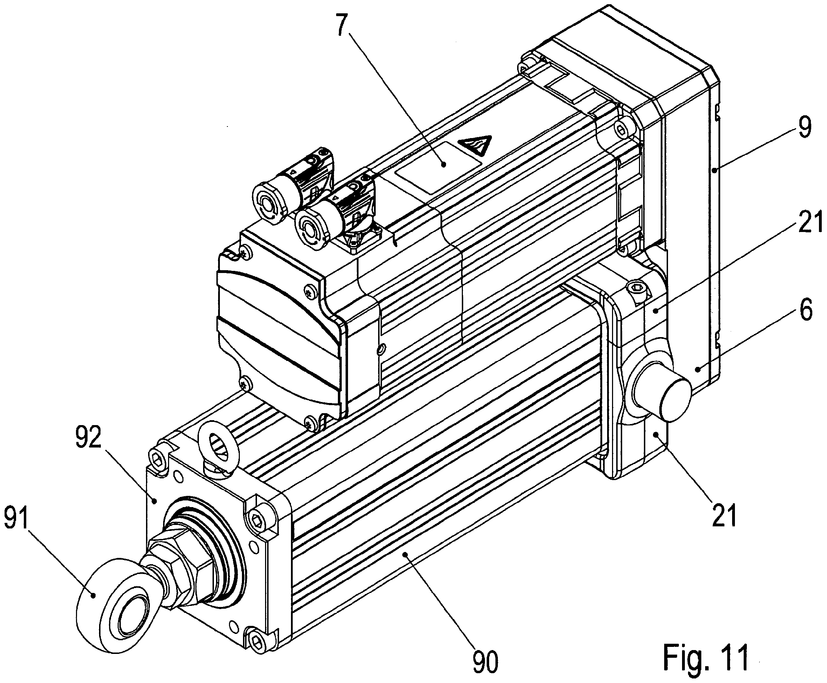

Wie in Figur 11 gezeigt, ist bei einem weiteren nicht zu der Erfindung gehörenden Beispiel der Spindeltrieb nach Figur 9 und 10 verwendbar, wobei statt des Antriebs der Spindel 104 durch einen Elektromotor die Spindel 104 mittels eines Riementriebs angetrieben wird, welcher durch einen Elektromotor 7 angetrieben ist. Auf diese Weise sind wiederum Elektromotor 7 und Spindeltrieb voneinander beabstandet angeordnet.

Hierzu ist im Lagerschild des Spindeltriebs die Spindel 104 über ein Lager drehbar gelagert, welches im Lagerschild des Spindeltriebs aufgenommen ist. Im Riemengehäuse 6 ist eine zusätzliche Lagerstelle mit Riemenscheibe angeordnet, welche das Lager und eine Rotationsabdichtung vor Kräften des Riemenzuges entkoppelt. Die Spindel ist dabei drehfest verbunden mit einem ersten Verzahnungsteil des Riementriebs, wobei die Verzahnung des Verzahnungsteils im Eingriff ist mit der Verzahnung des Riemens des Riementriebs, wobei die Verzahnung des Riemens des Riementriebs auch im Eingriff ist mit einem zweiten Verzahnungsteil des Riementriebs, welches drehfest mit der Rotorwelle des Elektromotors 7.

Am Lagerschild des Spindeltriebs sind wiederum in Querrichtung zur Achsrichtung der Spindel 104 Erhebungen ausgeformt, welche vorzugsweise als zylindrische Zapfenabschnitte ausgeformt sind. Auf diese Erhebungen des Lagerschildes ist wiederum ein jeweiliges Gelenkteil 21 aufsetzbar. Somit ist das Kardangelenk nach Figur 8 auf dem Lagerschild anordenbar und auf diese Weise die anzutreibende Vorrichtung über ein Kardangelenk verbindbar.

Bei weiteren erfindungsgemäßen Ausführungsbeispielen ist statt des jeweiligen Kardangelenks auch ein anderes Kreuzgelenk verwendbar.

Bei weiteren erfindungsgemäßen Ausführungsbeispielen ist statt des Zahnriemens, dessen Verzahnung mit Verzahnungsteilen im Eingriff ist, ein Riemen verwendet, der in Reibkontakt ist, also kraftschlüssig verbunden ist, mit Riemenscheiben. Dabei ist eine erste Riemenscheibe drehfest mit der Spindelmutter und eine zweite Riemenscheibe drehfest mit der Rotorwelle des Elektromotors verbunden.

### Bezugszeichenliste

1 Lagerschild
2 Wälzlager, insbesondere zweireihiges Wälzlager
3 Deckelteil
4 Klemmteil, insbesondere Schelle
5 erster Faltenbalg
6 Gehäuseteil für Riementrieb
7 Elektromotor
8 Verzahnungsteil
9 Deckelteil
10 Riemen, insbesondere Zahnriemen
11 Klemmteil, insbesondere Schelle
12 zweiter Faltenbalg
13 Klemmteil, insbesondere Schelle
15 Gelenkaufnahmeteil
16 Gelenkteil
17 Spindel, insbesondere Gewindespindel
18 Abdeckteil
19 Verzahnungsteil
20 Spindelmutter
21 Gelenkteil
22 Bolzen
23 Schraubteil
40 Ausnehmung, insbesondere durch das Abdeckteil 18 durchgehende Ausnehmung
70 Öffnung mit durch das Deckelteil 3 durchgehender Ausnehmung
71 Radialbohrung
72 Ausnehmung, insbesondere Umlenkanal
73 Öffnung, insbesondere ringförmige Ringöffnung
81 Durchlass für Zapfenabschnitt
82 Zapfenabschnitt
90 Gehäuseteil für Spindeltrieb
91 Gelenkteil
92 Deckelteil
101 Lagerschild
102 Wälzlager, insbesondere Kugellager
103 Dämpfungsring
104 Spindel
105 Kolbenstange
106 Spindelmutter
107 Nutenstein
108 Klemmring, eingeschraubt ins Lagerschild 101
109 Wellendichtring

## Patentansprüche

1. Linearantrieb mit einer in einem Lagerschild (1) drehbar gelagerten Spindelmutter und Spindel, **wobei die Spindel in die Spindelmutter eingeschraubt ist,**
wobei die Spindel durch die Spindelmutter hindurchgeführt ist **und ragt** beidseitig aus dem Lagerschild (1) **hervor,**
wobei ein erster Faltenbalg (5) einen ersten Bereich der Spindel zumindest teilweise umgibt und ein zweiter Faltenbalg (12) einen zweiten Bereich der Spindel zumindest teilweise umgibt,
**dadurch gekennzeichnet, dass**
das Lagerschild (1) eine durchgehende Ausnehmung aufweist zum Luftdruckausgleich zwischen dem von dem ersten Faltenbalg (5) umgebenen Luftraum und dem von dem zweiten Faltenbalg (12) umgebenen Luftraum.

2. Linearantrieb nach Anspruch 1,
**dadurch gekennzeichnet, dass**
das Lagerschild (1) zwischen dem ersten und dem zweiten Faltenbalg (5, 12) angeordnet ist, insbesondere also der erste Faltenbalg (5) vom zweiten Faltenbalg (12) beabstandet ist, insbesondere mittels zumindest des Lagerschilds

3. Linearantrieb nach mindestens einem der vorangegangenen Ansprüche,
**dadurch gekennzeichnet, dass**
der erste Faltenbalg (5) mit einem Abdeckteil (18) verbunden ist, welches lösbar verbunden ist mit einem Deckelteil (9) eines Riementriebs,
wobei das Deckelteil (9) mit einem Gehäuseteil (6) des Riementriebs verbunden ist, welches mit dem Lagerschild (1) verbunden ist, insbesondere an dessen vom zweiten Faltenbalg (12) abgewandten Seite des Lagerschilds,
wobei das Lagerschild (1), insbesondere an dessen vom ersten Faltenbalg (5) abgewandter Seite, mit einem Deckelteil (3) verbunden oder einstückig ausgeführt ist,
wobei der zweite Faltenbalg (12) mit dem Deckelteil (3) verbunden ist.

4. Linearantrieb nach Anspruch 1,
**dadurch gekennzeichnet, dass**
die Spindelmutter drehfest mit einem Verzahnungsteil (8) des Riementriebs verbunden ist, insbesondere wobei die Verzahnung des Verzahnungsteils im Eingriff ist mit einem Riemen (10), insbesondere Zahnriemen, des Riementriebs,
wobei der Riemen (10) mit der Verzahnung eines weiteren Verzahnungsteils im Eingriff ist,
wobei das weitere Verzahnungsteil (8) drehfest mit der Rotorwelle eines Elektromotors verbunden ist und in Querrichtung zur Achsrichtung der Spindel beabstandet ist vom ersten Verzahnungsteil (8),
oder dass
die Spindelmutter drehfest mit einer ersten Riemenscheibe eines Riementriebs kraftschlüssig verbunden ist, wobei der Riemen (10) mit einer zweiten Riemenscheibe kraftschlüssig verbunden ist, welches drehfest mit der Rotorwelle eines Elektromotors verbunden ist und beabstandet ist von der ersten Riemenscheibe, insbesondere in Querrichtung zur Achsrichtung der Spindel.

5. Linearantrieb nach Anspruch 3 oder 4,
**dadurch gekennzeichnet, dass**
das Abdeckteil (18) eine durchgehende Ausnehmung aufweist, welche einen Luftdurchlass zwischen dem von dem ersten Faltenbalg (5) umgebenen Luftraum und dem vom Riementrieb, insbesondere vom Gehäuseteil (6) des Riementriebs umgebenen und vom Deckelteil (9) sowie vom Abdeckteil (18) Luftraum, umgebenen Luftraum bewirkt.

6. Linearantrieb nach Anspruch 3, 5 oder 4,
**dadurch gekennzeichnet, dass**
das insbesondere mit dem zweiten Faltenbalg (12) verbundene Deckelteil (3) eine durchgehende Ausnehmung aufweist, welche einen Luftdurchlass zwischen dem von dem zweiten Faltenbalg (12) umgebenen Luftraum und der durch das Lagerschild (1) durchgehenden Ausnehmung bewirkt.

7. Linearantrieb nach mindestens einem der vorangegangenen Ansprüche,
**dadurch gekennzeichnet, dass**
das Lagerschild (1) ein Lager aufnimmt und die durch das Lagerschild (1) durchgehende Ausnehmung vom Lager beabstandet ist,
insbesondere einen größeren Radialabstand aufweist als das Lager, insbesondere zur Achse der Spindel.

8. Linearantrieb nach einem der Ansprüche 3 bis 7,
**dadurch gekennzeichnet, dass**
die durch das Lagerschild (1) durchgehende Ausnehmung einerseits in die durch das Deckteil (3) durchgehende Ausnehmung mündet und andererseits in den vom Riementrieb umgebenen Luftraum.

9. Linearantrieb nach einem der Ansprüche 3 bis 8,
**dadurch gekennzeichnet, dass**
im Lagerschild (1) oder vom Deckelteil (3) ein Wellendichtring aufgenommen ist, welcher zur Spindelmutter hin abdichtet,
insbesondere wobei der vom zweiten Faltenbalg (12) umgebene Luftraum gegenüber dem vom Lager überdeckten Raumbereich abgedichtet ist mittels des Wellendichtrings.

10. Linearantrieb nach mindestens einem der vorangegangenen Ansprüche,
**dadurch gekennzeichnet, dass**
am Lagerschild (1) in Querrichtung zur Achsrichtung der Spindel hervorragende Erhebungen ausgeformt sind, an welchen die anzutreibende Vorrichtung mittels eines Kardangelenks, Kreuzgelenks oder Kugelgelenks verbindbar ist,
insbesondere wobei die Drehachsen dieses Gelenks jeweils senkrecht zur Achsrichtung der Spindel ausgerichtet sind, insbesondere wobei die Drehachsen einen verschwindenden Abstand zueinander aufweisen,
und/oder dass
am Lagerschild (1) in Querrichtung zur Achsrichtung der Spindel hervorragende Erhebungen ausgeformt sind, an welchen ein Kardangelenk, Kreuzgelenk oder Kugelgelenk angeordnet ist zur Verbindung mit einer anzutreibenden Vorrichtung,
insbesondere wobei die Drehachsen dieses Gelenks jeweils senkrecht zur Achsrichtung der Spindel ausgerichtet sind, insbesondere wobei die Drehachsen einen verschwindenden Abstand zueinander aufweisen.

11. Linearantrieb nach mindestens einem der vorangegangenen Ansprüche,
**dadurch gekennzeichnet, dass**
an einem Endbereich der Spindel ein Kardangelenk oder Kreuzgelenk zur Verbindung mit einem Teil der anzutreibenden Vorrichtung angeordnet ist,
insbesondere wobei die Drehachsen dieses Gelenks jeweils senkrecht zur Achsrichtung der Spindel ausgerichtet sind, insbesondere wobei die Drehachsen voneinander beabstandet sind.

## Claims

1. A linear drive having a spindle nut, rotatably mounted in a bearing plate (1), and a spindle, wherein the spindle is screwed into the spindle nut,
wherein the spindle is guided through the spindle nut and projects from both sides of the bearing plate (1),
wherein a first bellows (5) at least partially surrounds a first region of the spindle and a second bellows (12) at least partially surrounds a second region of the spindle,
**characterised in that**
the bearing plate (1) has a through cutout for air pressure balancing between the air space surrounded by the first bellows (5) and the air space surrounded by the second bellows (12).

2. A linear drive according to claim 1,
**characterised in that**
the bearing plate (1) is arranged between the first and the second bellows (5,12), in particular therefore the first bellows (5) is spaced apart from the second bellows (12), in particular by means of at least the bearing plate.

3. A linear drive according to at least one of the preceding claims,
**characterised in that**
the first bellows (5) is connected to a covering part (18) which is detachably connected to a cover part (9) of a belt drive,
wherein the cover part (9) is connected to a housing part (6) of the belt drive, which housing part (6) is connected to the bearing plate (1), in particular to its bearing-plate side remote from the second bellows (12),
wherein the bearing plate (1) is connected to a cover part (3) or is in one piece therewith, in particular at the bearing-plate side remote from the first bellows (5),
wherein the second bellows (12) is connected to the cover part (3).

4. A linear drive according to claim 1,
**characterised in that**
the spindle nut is connected to a toothed part (8) of the belt drive in a rotationally-fixed manner,
in particular wherein the toothing of the toothed part engages a belt (10), in particular a toothed belt, of the belt drive,
wherein the belt (10) engages the toothing of a further toothed part,
wherein the further toothed part (8) is connected to the rotor shaft of an electric motor in a rotationally-fixed manner and is spaced apart from the first toothed part (8) in a transverse direction to the axial direction of the spindle,
or **in that**
the spindle nut is connected in a force-fixed manner to a first pulley of a belt drive in a rotationally-fixed manner, wherein the belt (10) is connected to a second pulley in a force-locked manner, which second pulley is connected in a rotationally-fixed manner to the rotor shaft of an electric motor and is spaced apart from the first pulley, in particular in a transverse direction to the axial direction of the spindle.

5. A linear drive according to claim 3 or 4,
**characterised in that**
the covering part (18) has a through cut-out which brings about an air passage between the air space surrounded by the first bellows (5) and the air space surrounded by the belt drive, in particular by the housing part (6) of the belt drive, and by the cover part (9) as well as by the covering part (18).

6. A linear drive according to claim 3, 5 or 4,
**characterised in that**
the cover part (3), connected in particular to the second bellows (12), has a though cut-out which brings about an air passage between the air space surrounded by the second bellows (12) and the cut-out passing through the bearing plate (1).

7. A linear drive according to at least one of the preceding claims,
**characterised in that**
the bearing plate (1) receives a bearing and the cut-out passing through the bearing plate (1) is spaced apart from the bearing,
in particular has a greater radial spacing than the bearing, in particular from the axis of the spindle.

8. A linear drive according to any one of claims 3 to 7,
**characterised in that**
the cut-out passing through the bearing plate (1) opens on the one hand into the cut-out passing through the cover part (3) and on the other hand into the air space surrounded by the belt drive.

9. A linear drive according to any one of claims 3 to 8,
**characterised in that**
a shaft-sealing ring is received in the bearing plate (1) or by the cover part (3), which shaft-sealing ring seals with respect to the spindle nut,
in particular wherein the air space surrounded by the second bellows (12) is sealed by means of the shaft-sealing ring with respect to the spatial region covered by the bearing.

10. A linear drive according to at least one of the preceding claims,
**characterised in that**
protrusions projecting in a transverse direction in relation to the axial direction of the spindle are formed on the bearing plate (1) and the device to be driven is connectable to these protrusions by means of a cardan joint, universal joint or ball joint,
in particular wherein the rotational axes of this joint are in each case oriented perpendicularly to the axial direction of the spindle, in particular wherein the rotational axes are at a negligible distance from one another,
and/or **in that**
protrusions projecting in a transverse direction in relation to the axial direction of the spindle are formed on the bearing plate (1) and a cardan joint, universal joint or ball joint for connection to a device to be driven is arranged on these protrusions,
in particular wherein the rotational axes of this joint are in each case oriented perpendicularly to the axial direction of the spindle, in particular wherein the rotational axes are at a negligible distance from one another.

11. A linear drive according to at least one of the preceding claims,
**characterised in that**
a cardan joint or universal joint for connection to a part of the device to be driven is arranged at an end region of the spindle,
in particular wherein the rotational axes of this joint are in each case oriented perpendicularly to the axial direction of the spindle, in particular wherein the rotational axes are spaced apart from one another.

## Revendications

1. Entraînement linéaire comportant un écrou de broche et une broche montés à rotation dans un flasque (1), la broche étant vissée dans l'écrou de broche,
la broche étant guidée à travers l'écrou de broche et dépassant des deux côtés du flasque (1),
un premier soufflet plissé (5) entourant au moins partiellement une première région de la broche et un deuxième soufflet plissé (12) entourant au moins partiellement une deuxième région de la broche, **caractérisé en ce que**
le flasque (1) comprend un évidement traversant pour l'équilibrage de pression d'air entre l'espace d'air entouré par le premier soufflet plissé (5) et l'espace d'air entouré par le deuxième soufflet plissé (12).

2. Entraînement linéaire selon la revendication 1, **caractérisé en ce que**
le flasque (1) est disposé entre le premier et le deuxième soufflet plissé (5, 12), en particulier donc le premier soufflet plissé (5) est espacé du deuxième soufflet plissé (12), en particulier au moyen d'au moins le flasque.

3. Entraînement linéaire selon au moins l'une des revendications précédentes,
**caractérisé en ce que**
le premier soufflet plissé (5) est relié à une partie de recouvrement (18), laquelle est reliée de manière amovible à une partie de couvercle (9) d'un entraînement à courroie,
la partie de couvercle (9) étant reliée à une partie de carter (6) de l'entraînement à courroie, laquelle partie de carter est reliée au flasque (1), en particulier sur son côté de flasque opposé au deuxième soufflet plissé (12),
le flasque (1), en particulier sur son côté opposé au premier soufflet plissé (5), étant relié à une partie de couvercle (3) ou réalisé d'une seule pièce avec celle-ci,
le deuxième soufflet plissé (12) étant relié à la partie de couvercle (3).

4. Entraînement linéaire selon la revendication 1, **caractérisé en ce que**
l'écrou de broche est relié de manière solidaire en rotation à une partie d'engrènement (8) de l'entraînement à courroie,
en particulier la denture de la partie d'engrènement s'engrenant avec une courroie (10), en particulier une courroie dentée, de l'entraînement à courroie,
la courroie (10) s'engrenant avec la denture d'une autre partie d'engrènement,
l'autre partie d'engrènement (8) étant reliée de manière solidaire en rotation à l'arbre de rotor d'un moteur électrique et étant espacée de la première partie d'engrènement (8) dans la direction transversale par rapport à la direction axiale de la broche,
ou **en ce que**
l'écrou de broche est relié à force de manière solidaire en rotation à une première poulie à courroie d'un entraînement à courroie, la courroie (10) étant reliée à force à une deuxième poulie à courroie, laquelle est reliée de manière solidaire en rotation à l'arbre de rotor d'un moteur électrique et est espacée de la première poulie à courroie, en particulier dans la direction transversale par rapport à la direction axiale de la broche.

5. Entraînement linéaire selon la revendication 3 ou 4,
**caractérisé en ce que**
la partie de recouvrement (18) comprend un évidement traversant, lequel produit un passage d'air entre l'espace d'air entouré par le premier soufflet plissé (5) et l'espace d'air entouré par l'entraînement à courroie, en particulier par la partie de carter (6) de l'entraînement à courroie et par la partie de couvercle (9) ainsi que par la partie de recouvrement (18).

6. Entraînement linéaire selon la revendication 3, 5 ou 4,
**caractérisé en ce que**
la partie de couvercle (3) reliée en particulier au deuxième soufflet plissé (12) comprend un évidement traversant, lequel produit un passage d'air entre l'espace d'air entouré par le deuxième soufflet plissé (12) et l'évidement traversant le flasque (1).

7. Entraînement linéaire selon au moins l'une des revendications précédentes,
**caractérisé en ce que**
le flasque (1) reçoit un palier et l'évidement traversant le flasque (1) est espacé du palier,
en particulier présente un plus grand espacement radial que le palier, en particulier par rapport à l'axe de la broche.

8. Entraînement linéaire selon l'une des revendications 3 à 7,
**caractérisé en ce que**
l'évidement traversant le flasque (1) débouche d'un côté dans l'évidement traversant la partie de couvercle (3) et de l'autre côté dans l'espace d'air entouré par l'entraînement à courroie.

9. Entraînement linéaire selon l'une des revendications 3 à 8,
**caractérisé en ce**
**qu'**un joint d'étanchéité d'arbre est reçu dans le flasque (1) ou par la partie de couvercle (3), lequel joint d'étanchéité réalise l'étanchéité vers l'écrou de broche, en particulier l'espace d'air entouré par le deuxième soufflet plissé (12) étant rendu étanche par rapport à la région spatiale recouverte par le palier au moyen du joint d'étanchéité d'arbre.

10. Entraînement linéaire selon au moins l'une des revendications précédentes,
**caractérisé en ce que**
des rehaussements saillant dans la direction transversale par rapport à la direction axiale de la broche sont formés sur le flasque (1), rehaussements auxquels le dispositif à entraîner peut être relié au moyen d'un joint de cardan, d'un joint à croisillon ou d'un joint sphérique,
en particulier les axes de rotation de ce joint étant orientés respectivement perpendiculairement à la direction axiale de la broche, en particulier les axes de rotation présentant un espacement infiniment petit les uns par rapport aux autres,
et/ou **en ce que**
des rehaussements saillant dans la direction transversale par rapport à la direction axiale de la broche sont formés sur le flasque (1), rehaussements au niveau desquels un joint de cardan, un joint à croisillon ou un joint sphérique est disposé pour la liaison à un dispositif à entraîner,
en particulier les axes de rotation de ce joint étant orientés respectivement perpendiculairement à la direction axiale de la broche, en particulier les axes de rotation présentant un espacement infiniment petit les uns par rapport aux autres.

11. Entraînement linéaire selon au moins l'une des revendications précédentes,
**caractérisé en ce**
**qu'**un joint de cardan ou un joint à croisillon pour la liaison à une partie du dispositif à entraîner est disposé au niveau d'une région d'extrémité de la broche, en particulier les axes de rotation de ce joint étant orientés respectivement perpendiculairement à la direction axiale de la broche, en particulier les axes de rotation étant espacés les uns des autres.
